# EUROPEAN PATENT APPLICATION

(11) **EP 4 831 856 A1**
(43) Date of publication of application: **28.10.2026**
(21) Application number: 24908419.5
(22) Date of filing: 13.12.2024
(51) Int. Cl.: G06F 21/62, G06F 16/53, G06Q 10/06, G06F 3/048

(54) **FLOW CHART DISPLAY METHOD AND DEVICE**

(30) Priority: 18.12.2023 CN 202311745254
(71) Applicant: Lemon Inc., Grand Cayman, KY1-1205 (KY)
(72) Inventor: TANG, Yitao, Beijing 100028 (CN); HE, Shengfan, Beijing 100028 (CN)
(74) Representative: Isarpatent
(86) International application number: PCT/SG2024/050793
(87) International publication number: WO 2025/136222

(57) **Abstract**

The present disclosure relates to the technical field of front-end display, and provides a flow chart display method and a device. The method comprises: acquiring user role information; if the user role information corresponds to an operation role, determining, from a target flow chart, target nodes corresponding to the user role information, and the relationship between the target nodes, the target nodes comprising a node to be operated corresponding to the operation role, and an operated node that the node to be operated depends on, and the operation role comprising a role used for performing a node operation; and displaying the target nodes in the target flow chart, and the relationship between the target nodes. The target nodes are not all nodes in the target flow chart, but nodes concerned by the operation role, so that a user can conveniently and quickly find a node to be operated, and perform an operation with the assistance of a dependent operated node.

## Description

The present application claims priority to Chinese Patent Application No. 202311745254.1, filed on December 18, 2023, which is incorporated herein by reference in its entirety as a part of the present application.

### TECHNICAL FIELD

Embodiments of the present disclosure relate to a flowchart display method and device.

### BACKGROUND

A flowchart is used to represent operations that need to be performed sequentially to complete a business process. Each node in the flowchart is used to represent an operation node, and each operation node is used to complete one operation of the business process. Operations of different operation nodes may be completed by different users.

A different flowchart is designed for a different business process. During user login, a corresponding flowchart may be selected according to a business, to display all nodes in the flowchart, so that the user may view a complete processing process of the business.

However, the preceding scheme has the problem of being inconvenient for user operation.

### SUMMARY

Embodiments of the present disclosure provide a flowchart display method and device, which may improve the verification accuracy of an image acquisition device.

In a first aspect, an embodiment of the present disclosure provides a flowchart display method. The method includes:
acquiring user role information;
determining, in response to the user role information corresponding to an operation role, target nodes corresponding to the user role information and relationships between the target nodes from a target flowchart, the target nodes including a to-be-operated node corresponding to the operation role and an operated node on which the to-be-operated node depends, the operation role including a role used to perform a node operation; and
displaying the target nodes in the target flowchart and the relationships between the target nodes.

In a second aspect, an embodiment of the present disclosure provides a flowchart display apparatus. The apparatus includes:
a role acquiring module, configured to acquire user role information;
a target node acquiring module, configured to determine, in response to the user role information corresponding to an operation role, target nodes corresponding to the user role information and relationships between the target nodes from a target flowchart, the target nodes including a to-be-operated node corresponding to the operation role and an operated node on which the to-be-operated node depends, the operation role including a role used to perform a node operation; and
a flowchart display module, configured to display the target nodes in the target flowchart and the relationships between the target nodes.

In a third aspect, an embodiment of the present disclosure provides an electronic device. The electronic device includes at least one processor and a memory.

The memory stores computer-executable instructions.

The at least one processor executes the computer-executable instructions stored in the memory, to cause the electronic device to implement the method according to the first aspect.

In a fourth aspect, an embodiment of the present disclosure provides a computer-readable storage medium. The computer-readable storage medium stores computer-executable instructions, and when a processor executes the computer-executable instructions , a computing device is caused to implement the method according to the first aspect.

In a fifth aspect, an embodiment of the present disclosure provides a computer program. The computer program is used to implement the method according to the first aspect.

### BRIEF DESCRIPTION OF DRAWINGS

In order to more clearly describe the technical solutions in the embodiments of the present disclosure, the following briefly introduces the drawings used in the description of the embodiments. Obviously, the drawings in the following description are some embodiments of the present disclosure, and for those skilled in the art, other drawings may also be obtained from these drawings without creative efforts.
Fig. 1 is a schematic structural diagram of a flowchart according to an embodiment of the present disclosure;
Fig. 2 is a flowchart of a flowchart display method according to an embodiment of the present disclosure;
Fig. 3 is a schematic diagram of displaying target nodes according to an embodiment of the present disclosure;
Fig. 4 is a schematic diagram of displaying a simple flowchart according to an embodiment of the present disclosure;
Fig. 5 is a flowchart of another flowchart display method according to an embodiment of the present disclosure;
Fig. 6 is a block diagram of a flowchart display apparatus according to an embodiment of the present disclosure; and
Fig. 7 is a block diagram of an electronic device according to an embodiment of the present disclosure.

### DETAILED DESCRIPTION

In order to make the objectives, technical solutions, and advantages of the embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, rather than all of them. All other embodiments obtained by those skilled in the art based on the embodiments of the present disclosure without creative efforts shall fall within the protection scope of the present disclosure.

The embodiments of the present disclosure are used to display a target flowchart, to assist a user in managing the target flowchart and performing a node operation. The target flowchart here is any flowchart to be displayed, and the flowchart is flexibly customized according to a business scenario. The flowchart includes a plurality of interdependent nodes, and each node is used to perform one operation. The flowchart in the embodiments of the present disclosure is a flowchart executed by a plurality of persons in collaboration, that is, all nodes in the flowchart are executed by at least two operators, and different nodes correspond to different operators.

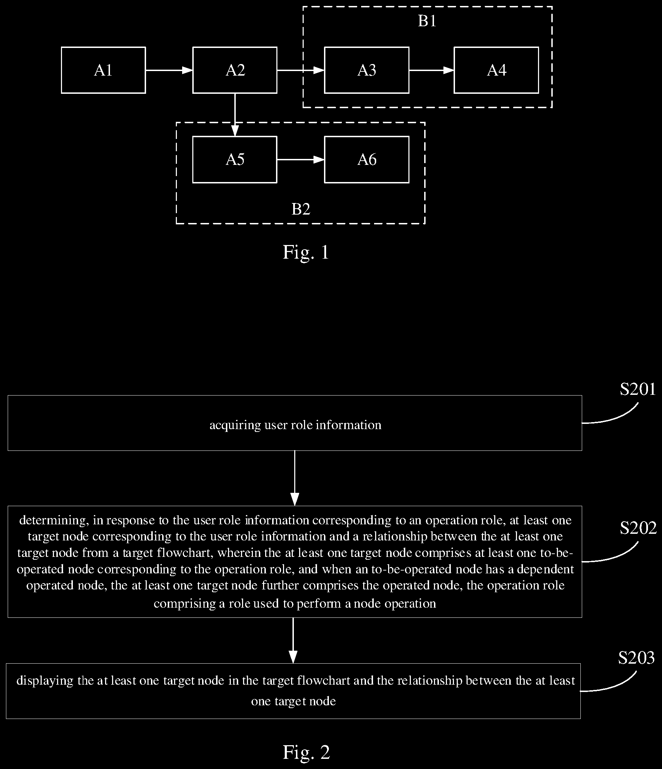

Fig. 1 is a schematic structural diagram of a flowchart according to an embodiment of the present disclosure. Referring to Fig. 1, the flowchart includes six nodes A1 to A6. According to the flowchart shown in Fig. 1, an operation of the node A1 is performed first, and then an operation of the node A2 is performed. Then, after the operation of the node A2 is performed, there are two branch paths B1 and B2, and the two branch paths may be performed in parallel separately. For the branch path B1, an operation corresponding to the node A3 is performed first, and then an operation corresponding to the node A4 is performed. For the branch path B2, an operation corresponding to the node A5 is performed first, and then an operation corresponding to the node A6 is performed.

As may be seen from Fig. 1, the flowchart may include one or more nodes, and the nodes have a sequence in terms of execution time. When a user or a manager who executes the nodes logs in, the flowchart needs to be displayed to the user or the manager.

For example, when the flowchart is displayed, all nodes in the flowchart are usually displayed to the user. Such a display strategy does not have a major problem for a simple flowchart, but for a complex flowchart, it is not easy for the user to quickly find a node to be operated or a node that the user wants to view from the complex flowchart. Therefore, it is not convenient for the user to perform an operation.

In order to solve the preceding technical problem, in the embodiments of the present disclosure, the flowchart is displayed based on user role information, to display target nodes when the user role information represents that the user is an operation role. The target nodes include a to-be-operated node corresponding to the operation role and an operated node on which the to-be-operated node depends. It may be understood that the target nodes are not all nodes in the target flowchart and relationships between all nodes, but are nodes that the operation role focuses on, so that the user may quickly find the node to be operated and perform the operation with the assistance of the relied operated node.

The technical solutions of the embodiments of the present disclosure and how the technical solutions of the present disclosure solve the preceding technical problem are described in detail below with specific embodiments. The following specific embodiments may be combined with each other, and the same or similar concepts or processes may not be repeated in some embodiments. The embodiments of the present disclosure will be described below with reference to the drawings.

Fig. 2 is a flowchart of a flowchart display method according to an embodiment of the present disclosure. Referring to Fig. 2, the flowchart display method includes the following steps.

S201: acquiring user role information.

The user role information is used to indicate a user role, and a common representation of the user role information is a user role identifier. When a user logs in to a system, a user role identifier may be determined according to a user identifier, and the user role identifier corresponding to the user identifier is set when the user registers.

In the embodiments of the present disclosure, user roles are divided into two major categories: a management role and an operation role. The management role is used to perform global management on the target flowchart, and the operation role is used to operate a corresponding node in the target flowchart. In the embodiments of the present disclosure, there may be one or more operation roles, and different operation roles may operate different nodes.

In the embodiments of the present disclosure, a corresponding user role may be determined based on the user role information, to implement different flowchart display strategies based on different user roles. The flowchart displays strategies in the embodiments of the present disclosure are set based on different functions of different user roles. For example, for the management role, in order to facilitate the management role to perform global management on the target flowchart, all nodes in the target flowchart and relationships between all nodes may be displayed. For another example, for the operation role, in order to facilitate the operation role to quickly operate the node that needs to be operated by the operation role, the to-be-operated node corresponding to the operation role and the operated node that is relied on when the operation is performed may be displayed.

S202: determining, in response to the user role information corresponding to an operation role, target nodes corresponding to the user role information and relationships between the target nodes from a target flowchart, the target nodes including a to-be-operated node corresponding to the operation role and an operated node on which the to-be-operated node depends, the operation role including a role used to perform a node operation.

The to-be-operated node is a node to be processed by the operation role corresponding to the user role information, and different operation roles correspond to different to-be-operated nodes. When the to-be-operated node is a first node in the target flowchart, the to-be-operated node does not have a relied operated node, and when the to-be-operated node is a node after the first node in the target flowchart, the to-be-operated node has a relied operated node.

It should be noted that the operated node here may be a node that has been operated by the operation role, or may be a node that has been operated by another operation role, and there may be one or more operated nodes.

When determining target nodes, first, acquiring target flowchart information stored for the target flowchart, where the target flowchart information includes node information about respective nodes in the target flowchart and relationship information between the nodes, and each piece of node information includes an operation role corresponding to the node and indication information indicating whether the node has been operated. Then, the to-be-operated node and the relied operated node of the operation role corresponding to the user role information in the target flowchart may be acquired based on the target flowchart information. The to-be-operated node refers to a node where the operation role specified in the node information is the same as the operation role corresponding to the user role information, and the indication information indicates the node is not yet operated. The operated node is a node that is associated with the to-be-operated node, located before the to-be-operated node, and indicated by the indication information in the node information to be operated.

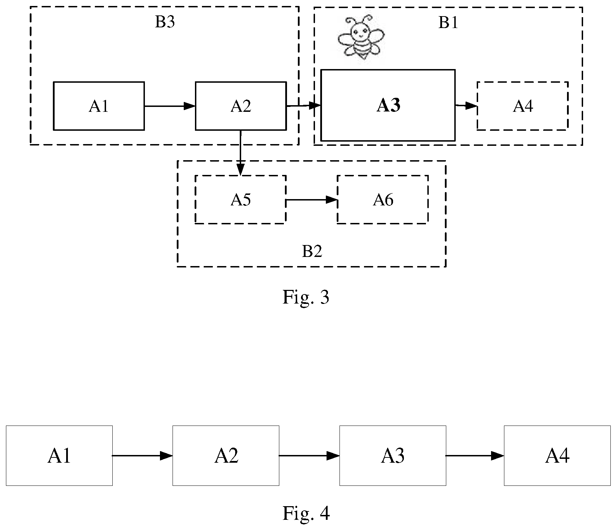

For example, after the corresponding operation role is determined according to the user role information, it is determined from the target flowchart shown in Fig. 3 that nodes that need to be operated by the operation role are the node A3 and the node A4, and the node A3 and the node A4 are both nodes that are not operated(i.e., not-operated nodes). Therefore, the node A3 that needs to be operated earliest may be used as the to-be-operated node of the operation role.

In some implementations, the to-be-operated node may be determined in combination with continuity between not-operated nodes corresponding to the operation role. Specifically, when the operation role corresponds to a plurality of not-operated nodes, if the plurality of not-operated nodes are continuous and there is no node corresponding to another operation role between the plurality of not-operated nodes, the plurality of operation nodes may all be used as to-be-operated nodes. If the plurality of not-operated nodes are not continuous, that is, there is a node corresponding to another operation role between the plurality of not-operated nodes, a node located before another operation role in the plurality of not-operated nodes may be used as a to-be-operated node. For example, when not-operated nodes of an operation role C1 are A1 and A3 in sequence, since there is a node A2 of another operation role C2 between the two not-operated nodes A1 and A3, a to-be-operated node for the operation role C1 is A1. For another example, when not-operated nodes of an operation role C3 are A5 and A6 in sequence, since there is no node of another operation role between the two not-operated nodes A5 and A6, the not-operated nodes A5 and A6 may be used as to-be-operated nodes of the operation role C3.

As may be seen from the preceding process, in the embodiments of the present disclosure, continuous not-operated nodes corresponding to the same operation role may be used as the to-be-operated nodes of the operation role, so that the operation role may operate the plurality of nodes at a time, which facilitates further improvement of the operation efficiency of the nodes.

In actual application, there may be one or more to-be-operated nodes, and one or more earliest nodes to be operated by the operation role may be displayed.

S203: displaying the target nodes in the target flowchart and the relationships between the target nodes.

Based on the target nodes determined in S202, the display process in S203 implements partial display of the target flowchart. Compared with displaying all nodes in the target flowchart, the partial display may save display space, and fewer nodes are displayed. The displayed target nodes include the to-be-operated node of the user, so that the user may quickly find the to-be-operated node. In addition, the user may also perform the operation with the assistance of the aforementioned operated node(s), so that the operation may be performed more quickly and the operation efficiency may be improved.

It may be understood that the to-be-operated node is usually one or more last nodes, and a node located at a front position is an operated node.

Fig. 3 is a schematic diagram of displaying target nodes according to an embodiment of the present disclosure. Fig. 3 is an example of displaying target nodes in the target flowchart shown in Fig. 1. Referring to Fig. 3, the target flowchart includes nodes A1 to A6. The node A3 and the node A4 belong to the branch path B1, and the node A5 and the node A6 belong to the branch path B2. The branch path B1 and the branch path B2 are two independent branch paths that do not affect each other. When the to-be-operated node of the operation role corresponding to the user role information is A3, the operated nodes on which the to-be-operated node A3 depends are the node A1 and the node A2. Therefore, only the node A1, the node A2, and the node A3 in the target flowchart are displayed during display, and the other nodes A4, A5, and A6, which are nodes circled by dotted lines, are not displayed.

It may be understood that the node A1 and the node A2 in Fig. 3 may be nodes that have been operated by another user role.

It may be seen that the content displayed in S203 is determined in S202. When the target nodes are determined in S202, it is not only necessary to determine whether the user role information corresponds to the operation role, but also necessary to further determine whether the target flowchart is a complex flowchart. If the user role information corresponds to the operation role, and the target flowchart is a complex flowchart, the target nodes corresponding to the operation role are acquired. Otherwise, even if the user role information corresponds to the operation role, when the target flowchart is a simple flowchart, all nodes in the target flowchart and relationships between the nodes may still be displayed.

Specifically, the preceding logic may be implemented through the following process: if the user role information corresponds to the operation role, and the target flowchart satisfies a preset condition, the target nodes corresponding to the user role information are determined from the target flowchart, to display the target nodes and the relationships; and if the user role information corresponds to a role other than the operation role, and/or the target flowchart does not satisfy the preceding preset condition, all nodes are determined from the target flowchart, to display all the nodes and relationships between the nodes.

It may be seen that the above preset condition is used to determine whether the target flowchart is a complex flowchart. When the target flowchart satisfies the preset condition, it is determined that the target flowchart is a complex flowchart, and when the target flowchart does not satisfy the preset condition, it is determined that the target flowchart is not a complex flowchart.

The preset condition includes at least one of the following: the number of branch paths in the target flowchart being greater than or equal to a first threshold, the number of nodes included in the target flowchart being greater than or equal to a second threshold, or a length of a branch path included in the target flowchart being greater than or equal to a third threshold.

As may be seen from the preceding process, in the embodiments of the present disclosure, it may be determined whether the target flowchart is a complex flowchart in three dimensions of the number of branch paths, the number of nodes, and the length of a branch path. In this way, the user role information and whether the target flowchart is a complex flowchart may be combined to implement a flexible display strategy.

Based on the preceding preset condition, a target flowchart that does not include a branch path may be used as a simple flowchart, to display all nodes in the target flowchart and relationships between the nodes. Fig. 4 is a schematic diagram of displaying a simple flowchart according to an embodiment of the present disclosure. Referring to Fig. 4, the target flowchart includes nodes A1 to A4, and the target flowchart does not include a branch path; that is, a number of branch paths is 0. Therefore, the target flowchart may be used as a simple flowchart, to display all the nodes A1 to A4 in the target flowchart and relationships between the nodes when any user role logs in.

In an extreme case, there is only one node in the target flowchart, and therefore when the target flowchart is displayed, the node is displayed. In this case, all detailed information of the node may be directly displayed, and there is no concept of a flowchart.

When the target nodes are displayed, in order to further facilitate the user to quickly and accurately find the to-be-operated node, the to-be-operated node and the operated node may be marked distinctively. Specifically, the to-be-operated node and the operated node may be marked distinctively by means of color, size, auxiliary mark, etc., so that the to-be-operated node is more prominent than the operated node. For example, the operated node may be displayed in an enlarged size, or displayed in a striking color, or marked with a bold line, etc.

Referring to Fig. 3, the to-be-operated node A3 is highlighted in a larger size, and the operated node A1 and the operated node A2 are displayed in a smaller size, so that the user may quickly find the to-be-operated node A3 from the display result shown in Fig. 3.

In some implementations, role prompt information may further be displayed around the to-be-operated node, to prompt the user role information corresponding to the node. For example, the role prompt information may be an avatar, a name, etc., of the operation role. Referring to Fig. 3, the role prompt information is displayed in an image manner next to the to-be-operated node A3, to prompt the user role corresponding to the image to operate the to-be-operated node.

In some implementations, for the operation role, the target nodes are displayed by default through S202 and S203, but the display mode of all the nodes may be switched to based on a user operation. Specifically, first, receiving a display switch operation triggered by the operation role, to switch between the first display mode of displaying target nodes and all nodes in the target flowchart for display in response to the display switch operation. In this way, a plurality of display modes may be provided for the operation role, and the display manners of the target flowchart may be enriched.

The display switch operation may be any operation on a display interface, for example, a click operation on an operation control in the display interface, a slide operation on the display interface, or a press operation on a physical button of the electronic device. The user may continuously perform the display switch operation to continuously and repeatedly switch between the target nodes and all the nodes in the target flowchart. For example, when the user performs the display switch operation once, the target nodes are switched to all nodes, which is equivalent to expanding the target flowchart. When the user performs the display switch operation a second time, switching from the target nodes to all nodes, which is equivalent to folding the target flowchart. In this way, the display is continuously and repeatedly switched.

As may be seen from the preceding description, S202 and S203 are used to display the target nodes corresponding to the operation role and the relationships between the target nodes when the user role information corresponds to the operation role. When the user role information corresponds to the management role, all nodes in the target flowchart and relationships between all the nodes, that is, the entire target flowchart, are displayed. Referring to Fig. 1, when the user role information corresponds to the management role, all the nodes A1 to A6 in the target flowchart and relationships between A1 and A6 may be displayed in order to facilitate the management role to perform global management on the target flowchart.

In order to improve the display effect of the target flowchart, when the target nodes or all nodes in the target flowchart are displayed, operation role information corresponding to each node may be displayed around the node. The operation role information is displayed by at least one of the following means: an image or text. The all nodes displayed here may be all the nodes displayed when the operation role performs the display switch operation, or may be all the nodes displayed for the management role, or may be all the nodes displayed for the simple flowchart. For the manner of displaying the operation role information here, reference may be made to the display effect for the to-be-operated node A3 in Fig. 3. Different from Fig. 3, the operation role information is displayed for each node here.

Further, when all nodes in the target flowchart are displayed, the operated node(s) and the not-operated node(s) may also be marked in the target flowchart. This may facilitate the management role to better grasp the progress of the target flowchart, to make decisions and perform management.

In some other implementations, in order to further improve the display effect of the target flowchart, when all nodes in the target flowchart are displayed, a processing stage to which each node belongs may also be displayed in the target flowchart. The target flowchart is divided into at least one processing stage, and each processing stage includes at least one node. As shown in Fig. 3, the branch path B1 and the branch path B2 are used as two processing stages of the target flowchart, and in addition, there is another processing stage B3. The node A1 and the node A2 belong to the processing stage B3, the node A3 and the node A4 belong to the processing stage B1, and the node A5 and the node A6 belong to the processing stage B2.

In the embodiments of the present disclosure, through marking of the processing stage(s), the management role may be assisted to better manage the target flowchart, and the operation role may also be assisted to analyze and obtain the processing stage to which the operation performed by the operation role belongs.

In some optional implementations, processing stage information may further be displayed for each processing stage, and the processing stage information includes at least one of the following: the number of nodes included in the processing stage, the number of not-operated nodes included in the processing stage, the number of operated nodes included in the processing stage, an operation role corresponding to the operated nodes included in the processing stage, an operation role corresponding to the not-operated nodes included in the processing stage, a proportion of the number of not-operated nodes included in the processing stage, or a proportion of the number of operated nodes included in the processing stage.

In addition, a not-operated node that needs to be operated earliest and an operation role corresponding to the not-operated node in each processing stage may also be marked, so as to facilitate the management role to notify the operation role to operate the corresponding node.

In order to facilitate the management role to notify the operation role, a notification control may also be displayed, and after the management role operates the notification control, the corresponding operation role may be notified to perform the operation. Optionally, after the notification control is operated, the not-operated node(s) may be displayed, so that the manager may select a node from the not-operated node(s) to notify the corresponding operation role. Certainly, a function of selecting all with one click may further be provided, so that the manager may notify the operation roles corresponding to all not-operated nodes at a time.

In summary, in the embodiments of the present disclosure, the user role information and the complexity degree of the target flowchart may be combined to flexibly display the target flowchart. When the user role information corresponds to the operation role, the target flowchart is displayed according to the complexity degree of the target flowchart. All nodes are displayed when the complexity of the target flowchart is as low as possible, and part of the target nodes are displayed when the complexity of the target flowchart is high, so as to facilitate the operation role to perform the operation. When the user role information corresponds to the management role, all nodes in the target flowchart are displayed, which may facilitate the management role to perform management from a global perspective.

In addition, in the process of displaying the target flowchart, the to-be-operated node and the operated node may be displayed distinctively, and the user role information corresponding to each node and the processing stage to which each node belongs may be prompted. This facilitates further improvement of the display effect of the target flowchart.

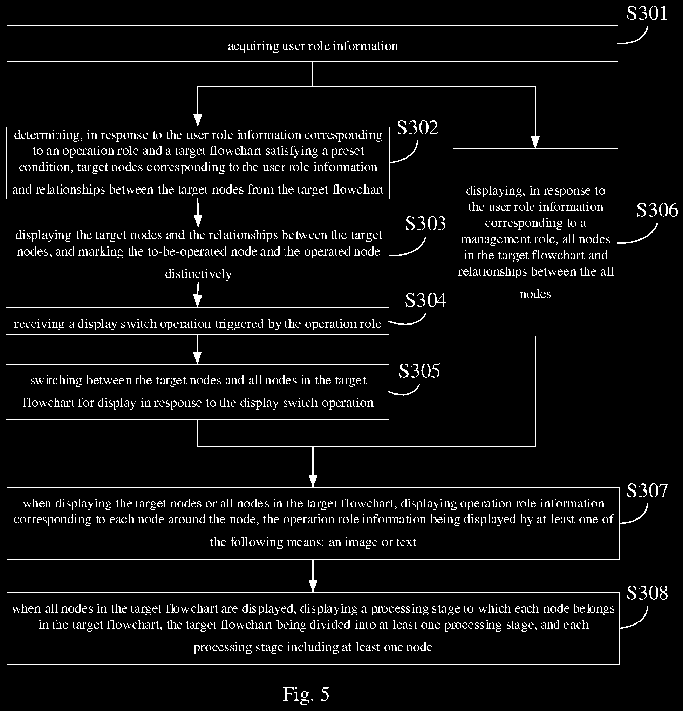

Fig. 5 is a flowchart of another flowchart display method according to an embodiment of the present disclosure. Referring to Fig. 5, the flowchart display method may include the following steps.

S301: acquiring user role information.

After S301 is executed, S302 to S305 or S306 is executed to display the target flowchart under two types of user role information.

S302: determining, in response to the user role information corresponding to an operation role and a target flowchart satisfying a preset condition, target nodes corresponding to the user role information and relationships between the target nodes from the target flowchart.

The target nodes include a to-be-operated node corresponding to the operation role and an operated node on which the to-be-operated node depends. The operation role includes a role used to perform a node operation. The preset condition includes at least one of the following: a number of branch paths in the target flowchart being greater than or equal to a first threshold, a number of nodes included in the target flowchart being greater than or equal to a second threshold, or a length of a branch path included in the target flowchart being greater than or equal to a third threshold.

S303: displaying the target nodes and the relationships between the target nodes, and marking the to-be-operated node and the operated node distinctively.

S304: receiving a display switch operation triggered by the operation role.

S305: switching between the target nodes and all nodes in the target flowchart for display in response to the display switch operation.

S306: displaying, in response to the user role information corresponding to a management role, all nodes in the target flowchart and relationships between the all nodes.

After S302 to S305 or S306 is executed, S307 and S308 are both executed.

S307: when displaying the target nodes or all nodes in the target flowchart, displaying operation role information corresponding to each node around the node, the operation role information being displayed by at least one of the following means: an image or text.

S308: when all nodes in the target flowchart are displayed, displaying a processing stage to which each node belongs in the target flowchart, the target flowchart being divided into at least one processing stage, and each processing stage including at least one node.

It should be noted that the steps shown in Fig. 5 may be flexibly adjusted in sequence on an independent basis. In addition, for the flowchart display method, reference may be made to the corresponding description of the flowchart display method shown in Fig. 2, which is not repeated here.

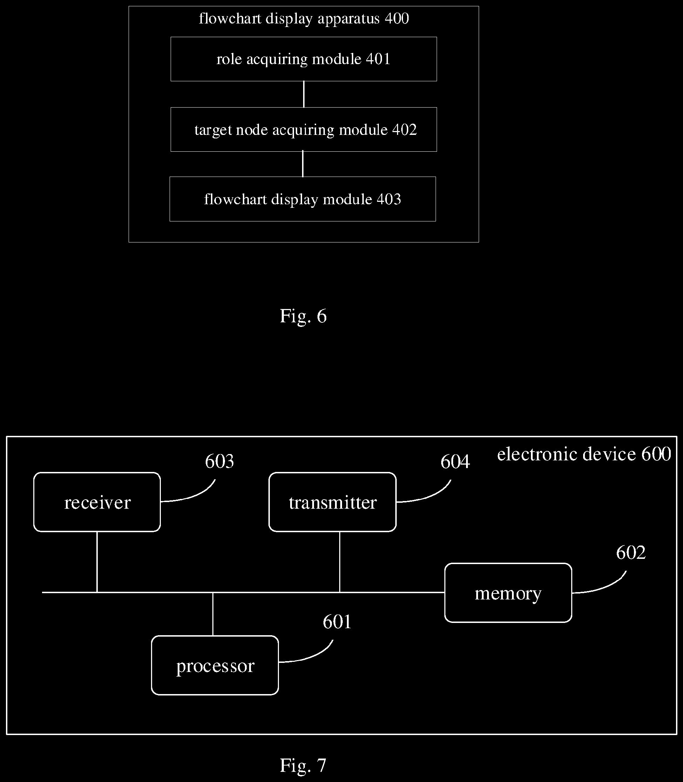

Corresponding to the flowchart display method of the above embodiments, Fig. 6 is a structural block diagram of a flowchart display apparatus according to an embodiment of the present disclosure. A hardware abstraction layer is provided in the image acquisition device, and the hardware abstraction layer includes a user driver and a kernel driver. For ease of description, only the parts related to the embodiments of the present disclosure are shown. Referring to Fig. 6, the flowchart display apparatus 400 includes:
a role acquiring module 401, configured to acquire user role information.

The target node acquiring module 402 is configured to determine, in response to the user role information corresponding to an operation role, target nodes corresponding to the user role information and relationships between the target nodes from a target flowchart, the target nodes including a to-be-operated node corresponding to the operation role and an operated node on which the to-be-operated node depends, the operation role including a role used to perform a node operation.

The flowchart display module 403 is configured to display the target nodes in the target flowchart and the relationships between the target nodes.

Optionally, the target node acquiring module 402 is further configured to:
determine, in response to the user role information corresponding to the operation role and the target flowchart satisfying a preset condition, the target nodes corresponding to the user role information from the target flowchart, the preset condition including at least one of the following: a number of branch paths in the target flowchart being greater than or equal to a first threshold, a number of nodes included in the target flowchart being greater than or equal to a second threshold, or a length of a branch path included in the target flowchart being greater than or equal to a third threshold.

Optionally, the flowchart display module 403 is further configured to:
mark the to-be-operated node and the operated node distinctively when the target nodes are displayed.

Optionally, the apparatus further includes:
a switch operation receiving module, configured to receive a display switch operation triggered by the operation role; and
a switch display module, configured to switch between the target nodes and all nodes in the target flowchart for display in response to the display switch operation.

Optionally, the apparatus further includes:
a global display module, configured to display, in response to the user role information corresponding to a management role, all nodes in the target flowchart and relationships between all nodes.

Optionally, the apparatus further includes:
an operation role prompt module, configured to: when the target nodes or all nodes in the target flowchart are displayed, display operation role information corresponding to each node around the node, the operation role information being displayed by at least one of the following means: an image or text.

Optionally, the apparatus further includes:
a processing stage marking module, configured to: when all nodes in the target flowchart are displayed, display a processing stage to which each node belongs in the target flowchart, the target flowchart being divided into at least one processing stage, and each processing stage including at least one node.

The flowchart display apparatus provided in this embodiment may be used to implement the technical solutions of the above flowchart display method embodiments, and the implementation principles and technical effects thereof are similar, which are not repeated here in this embodiment.

Fig. 7 is a structural block diagram of an electronic device according to an embodiment of the present disclosure. The electronic device 600 includes a memory 602 and at least one processor 601.

The memory 602 stores computer-executable instructions.

The at least one processor 601 executes the computer-executable instructions stored in the memory 602, to cause the electronic device 600 to implement the above flowchart display method.

In addition, the electronic device may further include a receiver 603 and a transmitter 604. The receiver 603 is configured to receive information from another apparatus or device and forward the information to the processor 601, and the transmitter 604 is configured to send information to another apparatus or device.

In a first example of the first aspect, an embodiment of the present disclosure provides a flowchart display method. The method includes:
acquiring user role information;
determining, in response to the user role information corresponding to an operation role, target nodes corresponding to the user role information and relationships between the target nodes from a target flowchart, the target nodes including a to-be-operated node corresponding to the operation role and an operated node on which the to-be-operated node depends, the operation role including a role used to perform a node operation; and
displaying the target nodes in the target flowchart and the relationships between the target nodes.

Based on the first example of the first aspect, in a second example of the first aspect, the determining, in response to the user role information corresponding to an operation role, target nodes corresponding to the user role information from a target flowchart includes:
determining, in response to the user role information corresponding to the operation role and the target flowchart satisfying a preset condition, the target nodes corresponding to the user role information from the target flowchart, the preset condition including at least one of the following: a number of branch paths in the target flowchart being greater than or equal to a first threshold, a number of nodes included in the target flowchart being greater than or equal to a second threshold, or a length of a branch path included in the target flowchart being greater than or equal to a third threshold.

Based on the first example of the first aspect, in a third example of the first aspect, the displaying the target nodes in the target flowchart includes:
marking the to-be-operated node and the operated node distinctively when the target nodes are displayed.

Based on the first example of the first aspect, in a fourth example of the first aspect, the method further includes:
receiving a display switch operation triggered by the operation role; and
switching between the target nodes and all nodes in the target flowchart for display in response to the display switch operation.

Based on the first example of the first aspect, in a fifth example of the first aspect, the method further includes:
displaying, in response to the user role information corresponding to a management role, all nodes in the target flowchart and relationships between all nodes.

Based on the first example to the fifth example of the first aspect, in a sixth example of the first aspect, the method further includes:
when the target nodes or all nodes in the target flowchart are displayed, displaying operation role information corresponding to each node around the node, the operation role information being displayed by at least one of the following means: an image or text.

Based on the first example to the fifth example of the first aspect, in a seventh example of the first aspect, the method further includes:
when all nodes in the target flowchart are displayed, displaying a processing stage to which each node belongs in the target flowchart, the target flowchart being divided into at least one processing stage, and each processing stage including at least one node.

In a first example of the second aspect, a flowchart display apparatus is provided. The apparatus includes:
a role acquiring module, configured to acquire user role information;
a target node acquiring module, configured to determine, in response to the user role information corresponding to an operation role, target nodes corresponding to the user role information and relationships between the target nodes from a target flowchart, the target nodes including a to-be-operated node corresponding to the operation role and an operated node on which the to-be-operated node depends, the operation role including a role used to perform a node operation; and
a flowchart display module, configured to display the target nodes in the target flowchart and the relationships between the target nodes.

Based on the first example of the second aspect, in a second example of the second aspect, the target node acquiring module is further configured to:
determine, in response to the user role information corresponding to the operation role and the target flowchart satisfying a preset condition, the target nodes corresponding to the user role information from the target flowchart, the preset condition including at least one of the following: a number of branch paths in the target flowchart being greater than or equal to a first threshold, a number of nodes included in the target flowchart being greater than or equal to a second threshold, or a length of a branch path included in the target flowchart being greater than or equal to a third threshold.

Based on the first example of the second aspect, in a third example of the second aspect, the flowchart display module is further configured to:
mark the to-be-operated node and the operated node distinctively when the target nodes are displayed.

Based on the first example of the second aspect, in a fourth example of the second aspect, the apparatus further includes:
a switch operation receiving module, configured to receive a display switch operation triggered by the operation role; and
a switch display module, configured to switch between the target nodes and all nodes in the target flowchart for display in response to the display switch operation.

Based on the first example of the second aspect, in a fifth example of the second aspect, the apparatus further includes:
a global display module, configured to display, in response to the user role information corresponding to a management role, all nodes in the target flowchart and relationships between all nodes.

Based on the first example to the fifth example of the second aspect, in a sixth example of the second aspect, the apparatus further includes:
an operation role prompt module, configured to: when the target nodes or all nodes in the target flowchart are displayed, display operation role information corresponding to each node around the node, the operation role information being displayed by at least one of the following means: an image or text.

Based on the first example to the fifth example of the second aspect, in a seventh example of the second aspect, the apparatus further includes:
a processing stage marking module, configured to: when all nodes in the target flowchart are displayed, display a processing stage to which each node belongs in the target flowchart, the target flowchart being divided into at least one processing stage, and each processing stage including at least one node.

In a third aspect, according to one or more embodiments of the present disclosure, an electronic device is provided. The electronic device includes at least one processor and a memory.

The memory stores computer-executable instructions.

The at least one processor executes the computer-executable instructions stored in the memory, to cause the electronic device to implement the flowchart display method according to any one of the first aspect.

In a fourth aspect, according to one or more embodiments of the present disclosure, a computer-readable storage medium is provided. The computer-readable storage medium stores computer-executable instructions, and when a processor executes the computer-executable instructions, a computing device is caused to implement the flowchart display method according to any one of the first aspect.

In a fifth aspect, according to one or more embodiments of the present disclosure, a computer program is provided. The computer program is used to implement the flowchart display method according to any one of the first aspect.

The preceding descriptions are merely illustrations of the technical principles employed by the embodiments of the present disclosure. Those skilled in the art should understand that the scope of disclosure involved in the present disclosure is not limited to the technical solutions formed by the specific combinations of the preceding technical features, and should also cover other technical solutions formed by any combinations of the preceding technical features or equivalent features thereof without departing from the preceding concept of disclosure. For example, a technical solution formed by a replacement of the preceding features with the technical features disclosed in the present disclosure (but not limited to) with similar functions also falls within the scope of the present disclosure.

In addition, although operations are depicted in a particular order, it should not be understood that these operations are required to be performed in the particular order shown or in a sequential order. Under certain circumstances, multitasking and parallel processing may be advantageous. Likewise, although several specific implementation details are included in the preceding discussions, these details should not be construed as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable sub combination.

Although the present disclosure has been described in a language specific to structural features and/or logical actions of the method, it should be understood that the subject matter defined in the appended claims is not necessarily limited to the specific features or actions described above. Conversely, the specific features and actions described above are merely exemplary forms of implementing the claims.

## Claims

1. A flowchart display method, comprising:
acquiring user role information;
determining, in response to the user role information corresponding to an operation role, target nodes corresponding to the user role information and relationships between the target nodes from a target flowchart, wherein the target nodes comprises a to-be-operated node corresponding to the operation role and an operated node on which the to-be-operated node depends, the operation role comprising a role used to perform a node operation; and
displaying the target nodes in the target flowchart and the relationships between the target nodes.

2. The method of claim 1, wherein the determining, in response to the user role information corresponding to an operation role, target nodes corresponding to the user role information from a target flowchart comprises:
determining, in response to the user role information corresponding to the operation role and the target flowchart satisfying a preset condition, the target nodes corresponding to the user role information from the target flowchart, the preset condition comprising at least one of following: a number of branch paths in the target flowchart being greater than or equal to a first threshold, a number of nodes comprised in the target flowchart being greater than or equal to a second threshold, or a length of a branch path comprised in the target flowchart being greater than or equal to a third threshold.

3. The method of claim 1 or 2, wherein the displaying the target nodes in the target flowchart comprises:
marking the to-be-operated node and the operated node distinctively when the target nodes are displayed.

4. The method of any of claims 1 to 3, further comprising:
receiving a display switch operation triggered by the operation role; and
switching between the target nodes and all nodes in the target flowchart for display in response to the display switch operation.

5. The method of any of claims 1 to 4, further comprising:
displaying, in response to the user role information corresponding to a management role, all nodes in the target flowchart and relationships between the all nodes.

6. The method of any of claims 1 to 5, further comprising:
when displaying the target nodes or all nodes in the target flowchart, displaying operation role information corresponding to each node around the node, wherein the operation role information is displayed by at least one of following means: an image or text.

7. The method of any of claims 1 to 5, further comprising:
when displaying all nodes in the target flowchart, displaying a processing stage to which each node belongs in the target flowchart, wherein the target flowchart is divided into at least one processing stage, and each processing stage comprises at least one node.

8. A flowchart display apparatus, comprising:
a role acquiring module, configured to acquire user role information;
a target node acquiring module, configured to determine, in response to the user role information corresponding to an operation role, target nodes corresponding to the user role information and relationships between the target nodes from a target flowchart, the target nodes comprising a to-be-operated node corresponding to the operation role and an operated node on which the to-be-operated node depends, the operation role comprising a role used to perform a node operation; and
a flowchart display module, configured to display the target nodes in the target flowchart and the relationships between the target nodes.

9. An electronic device, comprising at least one processor and a memory, wherein,
the memory is configured to store computer-executable instructions; and
the at least one processor is configured to execute the computer-executable instructions stored in the memory, to cause the electronic device to implement the flowchart display method of any of claims 1 to 7.

10. A computer-readable storage medium, storing computer-executable instructions, wherein when a processor executes the computer-executable instructions, a computing device is caused to implement the flowchart display method of any of claims 1 to 7.

11. A computer program, wherein the computer program is used to implement the method of any of claims 1 to 7.
